# EUROPEAN PATENT APPLICATION

(11) **EP 4 265 097 A1**
(43) Date of publication of application: **25.10.2023**
(21) Application number: 23168891.2
(22) Date of filing: 20.04.2023
(51) Int. Cl.: A01D 34/81, A01D 34/82

(54) **GARDEN TOOL POWER SOURCE COMPARTMENT HAVING DRAINAGE**

(30) Priority: 20.04.2022 US 202263332863 P; 31.08.2022 US 202263374178 P
(71) Applicant: Techtronic Cordless GP, Anderson, SC 29621 (US)
(72) Inventor: LAI, Hok Sum Sam, Kwai Chung (HK); NG, Ho Lam, Kwai Chung (HK)
(74) Representative: Zimmermann & Partner Patentanwälte mbB

(57) **Abstract**

A garden tool includes a prime mover, a housing, a power source, and a door. The housing defines a power source compartment. The housing also defines a first aperture and a second aperture each in communication with the power source compartment. The power source is configured to provide power to the prime mover. The power source is removably receivable in the power source compartment. The door is configured to move between a closed position in which the first aperture is closed and an open position in which the first aperture is open. The second aperture is configured to provide fluid communication between the power source compartment and an external environment for draining fluid from the power source compartment.

## Description

### CROSS-REFERENCE TO RELATED APPLICATIONS

This application claims priority to co-pending U.S. Provisional Patent Application No. 63/332,863, filed on April 20, 2022 (Atty. Docket No. 206737-9051-US01) and to co-pending U.S. Provisional Patent Application No. 63/374,178, filed on August 31, 2022 (Atty. Docket No. 206737-9051-US02), the entire contents of which are incorporated herein by reference.

### BACKGROUND

The present disclosure relates to a garden tool, such as a robotic lawn mower having a compartment for receiving a battery pack therein.

### SUMMARY

In one aspect, the disclosure provides a garden tool. The garden tool includes a prime mover, a housing, a power source, and a door. The housing defines a power source compartment. The housing also defines a first aperture and a second aperture each in communication with the power source compartment. The power source is configured to provide power to the prime mover. The power source is removably receivable in the power source compartment. The door is configured to move between a closed position in which the first aperture is closed and an open position in which the first aperture is open. The second aperture is configured to provide fluid communication between the power source compartment and an external environment for draining fluid from the power source compartment.

Alternatively or additionally, in any combination: a stopper configured to selectively close the second aperture, wherein the stopper is movable between a draining position in which the second aperture is in fluid communication with the external environment for draining fluid and a stopped position in which the second aperture is closed; wherein the stopper is configured to move to the stopped position when the power source is inserted into the power source compartment and to move to the draining position when the power source is removed from the power source compartment; a linkage operably coupled to the stopper and engageable by the power source in the power source compartment; wherein the stopper is configured to move to the stopped position when the door is in the closed position and to move to the draining position when the door is in the open position; a linkage operably coupled between the stopper and the door; the linkage is disposed at least partly outside the power source compartment; an electrical terminal disposed in the power source compartment, the electrical terminal configured to electrically couple the power source to the prime mover; wherein the garden tool is a robotic lawn mower comprising a plurality of wheels operatively coupled to the prime mover and configured to convert tractive effort into motion of the robotic lawn mower on a support surface, and a blade configured to cut vegetation.

In another aspect, the disclosure provides a garden tool. The garden tool includes a housing defining a power source compartment, a power source configured to provide power to a prime mover, the power source receivable in the power source compartment, and a door configured to selectively close the power source compartment. The garden tool also includes an aperture defined in the housing and configured to provide fluid drainage from the power source compartment independent of the door.

Alternatively or additionally, in any combination: a stopper configured to selectively close the aperture, wherein the stopper is movable between a draining position in which the aperture is in fluid communication with an external environment for draining fluid and a stopped position in which the aperture is closed; a linkage operably coupled to the stopper and engageable by the power source in the power source compartment, wherein the linkage is configured to move the stopper to the stopped position when the power source is inserted into the power source compartment and to move the stopper to the draining position when the power source is removed from the power source compartment; a linkage operably coupled between the stopper and the door, wherein the linkage is configured to move the stopper to the stopped position when the door is in the closed position and to move the stopper to the draining position when the door is in the open position; an electrical terminal disposed in the power source compartment, the electrical terminal configured to electrically couple the power source to the prime mover.

In yet another aspect, the disclosure provides an electric lawn mower having a housing defining a power source compartment, a prime mover, a power source configured to provide power to the prime mover, the power source removably receivable in the power source compartment, a plurality of wheels operatively coupled to the prime mover and configured to convert tractive effort into motion of the robotic lawn mower on a support surface, a blade configured to cut vegetation, and a door configured to selectively open and close the power source compartment. The power source compartment is selectively drainable other than through the door.

Alternatively or additionally, in any combination: a stopper configured to selectively close a drain aperture, wherein the stopper is movable between a draining position in which the drain aperture is in fluid communication with an external environment for draining fluid and a stopped position in which the drain aperture is closed; a linkage operably coupled to the stopper and engageable by the power source in the power source compartment, wherein the linkage is configured to move the stopper to the stopped position when the power source is inserted into the power source compartment and to move the stopper to the draining position when the power source is removed from the power source compartment; a linkage operably coupled between the stopper and the door, wherein the linkage is configured to move the stopper to the stopped position when the door is in a closed position and to move the stopper to the draining position when the door is in an open position; an electrical terminal disposed in the power source compartment, the electrical terminal configured to electrically couple the power source to the prime mover; wherein the housing defines a top and a bottom generally opposite the top, wherein the blade is disposed closer to the bottom than the top, wherein the door is at least partially disposed on the top, and wherein the power source compartment is selectively drainable through the bottom.

In yet another aspect, the disclosure provides a power source containment assembly for a garden tool. The power source containment assembly includes a housing defining a power source compartment configured to receive a removable power source. The power source containment assembly also includes an electrical terminal configured to electrically couple with the removable power source. The electrical terminal is disposed in the power source compartment. The power source containment assembly also includes a door configured to selectively close the power source compartment and an aperture defined in the housing. The aperture is configured to provide fluid drainage from the power source compartment independent of the door.

Alternatively or additionally, in any combination: a stopper configured to selectively close the aperture, wherein the stopper is movable between a draining position in which the aperture is in fluid communication with an external environment for draining fluid and a stopped position in which the aperture is closed; wherein the stopper is configured to move to the stopped position when the power source is inserted into the power source compartment and to move to the draining position when the power source is removed from the power source compartment; wherein the stopper is configured to move to the stopped position when the door is in the closed position and to move to the draining position when the door is in the open position; a linkage operably coupled to the stopper and engageable by the power source in the power source compartment; a linkage operably coupled between the stopper and the door; an electrical terminal disposed in the power source compartment, the electrical terminal configured to electrically couple with the power source.

In a first further aspect, the disclosure provides a garden tool. The garden tool includes a power source configured to provide power to a prime mover, the power source removably disposed in a power source compartment. The garden tool further includes a door configured to move between a closed position in which the power source compartment is closed and an open position in which the power source compartment is open, the door being configured to slide from the closed position to an intermediate position, and to rotate from the intermediate position to the open position.

Alternatively or additionally, in any combination: wherein the door is inhibited from rotating between the closed position and the intermediate position; a hinge including a hinge body and a pivot shaft, the hinge body configured to slide relative to the pivot shaft between the closed position and the intermediate position of the door, and configured to rotate about the pivot shaft between the intermediate position and the open position of the door; an actuator disposed directly adjacent the door; wherein the door is configured to slide away from the actuator from the closed position to the intermediate position; wherein the door is configured to sealingly engage the actuator in the closed position; a hinge including a hinge seat, a shaft seat, a pivot shaft supported by the shaft seat, and a hinge body translatable relative to the pivot shaft between a first position in which the hinge seat inhibits rotation of the hinge body about the pivot shaft and a second position in which the hinge body is rotatable about the pivot shaft; wherein the first position corresponds to the closed position of the door and the second position corresponds to the intermediate position of the door;

In a second further aspect, the disclosure provides a garden tool. The garden tool includes a power source configured to provide power to a prime mover, the power source disposed in a power source compartment. The garden tool further includes an actuator configured to stop the prime mover, and a door configured to seal against the actuator.

Alternatively or additionally, in any combination: wherein the door is configured to selectively open and close the power source compartment, and wherein the power source is removable from the power source compartment; wherein the door is configured to move between a first position in which the power source compartment is closed and an second position in which the power source compartment is open; wherein a water tight seal is provided in the first position, and wherein the door is configured to slide from the first position to an intermediate position to disengage the water tight seal, and to rotate from the intermediate position to the second position; wherein the door is inhibited from rotating between the first position and the intermediate position; a hinge coupled to the door, the hinge including a hinge body and a pivot shaft, the hinge body configured to slide relative to the pivot shaft between a closed position and an intermediate position, and configured to rotate about the pivot shaft between the intermediate position and an open position, wherein the door is closed in the closed position and the door is open in the open position; wherein the door is configured to slide away from the actuator to open the power source compartment; a hinge including a hinge seat, a shaft seat, a pivot shaft supported by the shaft seat, the pivot shaft defining a pivot axis, and a hinge body translatable relative to the pivot shaft between a first position in which the hinge seat inhibits rotation of the hinge body about the pivot axis and a second position in which the hinge body is rotatable about the pivot axis; wherein the first position corresponds to a closed position in which the door closes the power source compartment.

In yet a third further aspect, the disclosure provides a power source containment area for a garden tool. The power source containment area includes a power source compartment configured to receive a removable power source, and a door configured to selectively seal the power source compartment. The door is configured to slide to break the seal and configured to pivot to open the power source compartment.

Alternatively or additionally, in any combination: an actuator configured to stop a prime mover coupled to the removable power source, wherein the door is configured to sealingly engage the actuator; wherein the door is further configured to slide away from the actuator to break the seal.

Other aspects of the disclosure will become apparent by consideration of the detailed description and accompanying drawings.

### BRIEF DESCRIPTION OF THE DRAWINGS

Fig. 1 is a top perspective view of an autonomous lawn mower system embodying the disclosure.
Fig. 2 is a cross-sectional view of the lawn mower system of Fig. 1 taken through line 2-2 in Fig. 1.
Fig. 3 is a schematic diagram illustrating a control system for the lawn mower system of Fig. 1.
Fig. 4 is a top perspective view of the autonomous lawn mower of Fig. 1.
Fig. 5A is a top perspective view of the autonomous lawn mower of Fig. 4, with the power source compartment door removed for clarity.
Fig. 5B is another top perspective view of the autonomous lawn mower of Fig. 4, with the power source compartment door and the outer housing removed for clarity.
Fig. 6 is a perspective view of a hinge mechanism supporting the power source compartment door in the open position.
Fig. 7 is a perspective view of the hinge mechanism supporting the power source compartment door in the closed position.
Fig. 8 is a side view of the hinge mechanism of Fig. 6, with the hinge mechanism in the closed position.
Fig. 9 is a side view of the hinge mechanism of Fig. 6, with the hinge mechanism in the intermediate position.
Fig. 10 is a side view of the hinge mechanism of Fig. 6, with the hinge mechanism in the open position.
Fig. 11 is a rear perspective view of the autonomous lawn mower of Fig. 1.
Fig. 12 is a perspective view of the housing defining the power source compartment of the autonomous lawn mower of Fig. 1.
Fig. 13 is a perspective view of a first implementation of a drain stopper linkage for the power source compartment of Fig. 12.
Fig. 14 is a perspective view of a second implementation of a drain stopper linkage for the power source compartment of Fig. 12.

### DETAILED DESCRIPTION

Before any implementations of the disclosure are explained in detail, it is to be understood that the disclosure is not limited in its application to the details of construction and the arrangement of components set forth in the following description or illustrated in the following drawings. The disclosure is capable of other implementations and of being practiced or of being carried out in various ways. Also, it is to be understood that the phraseology and terminology used herein are for the purpose of description and should not be regarded as limiting. The terms "approximately", "about", "generally", "substantially", and the like should be understood to mean within standard tolerances, as would be understood by one of ordinary skill in the art, unless specific tolerances are defined below.

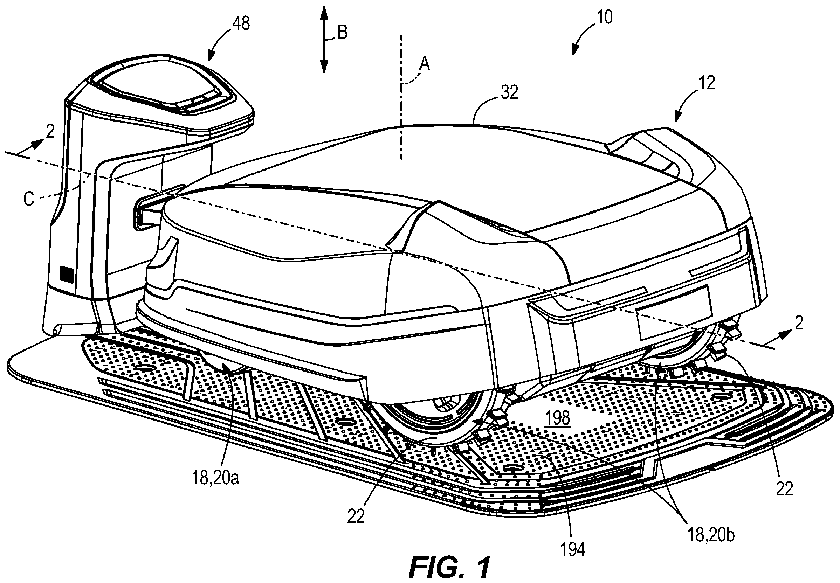

Figs. 1-2 illustrate a garden tool system 10. For example, the garden tool system 10 may include a garden tool 12, such as a lawn mower 12 (as shown), or in other implementations may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. For example, other implementations of the garden tool 12 may include a vacuum cleaner, a trimmer, a string trimmer, a brush cutter, a hedge trimmer, a sweeper, a cutter, a plow, a debris blower, a snow blower, etc. In the illustrated implementation, the garden tool system 10 includes the lawn mower 12 and a charging station 48. The garden tool 12 may be autonomous, semi-autonomous, or not autonomous.

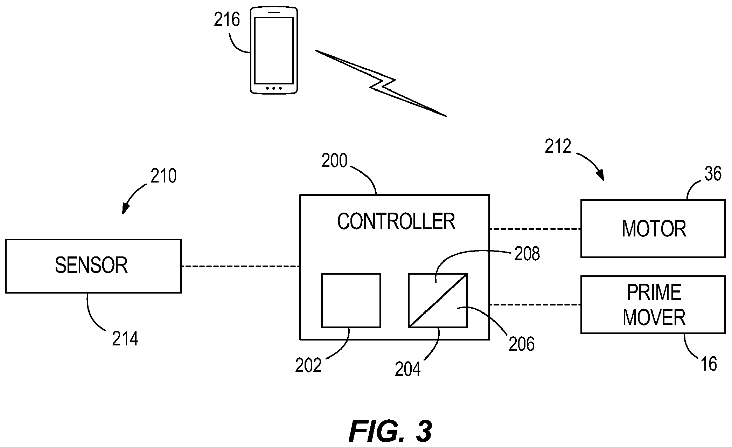

For example, as illustrated in Fig. 3, the lawn mower 12 may include a controller 200 having a programmable processor 202 (e.g., a microprocessor, a microcontroller, or another suitable programmable device), a memory 204, and a human-machine interface 216 (which may include a mobile device, other remote device, and/or actuator(s) on the lawn mower 12 itself). The memory 204 may include, for example, a program storage area 206 and a data storage area 208. The program storage area 206 and the data storage area 208 can include combinations of different types of memory 204, such as read-only memory ("ROM"), random access memory ("RAM") (e.g., dynamic RAM ["DRAM"], synchronous DRAM ["SDRAM"], etc.), electrically erasable programmable read-only memory ("EEPROM"), flash memory, a hard disk, an SD card, or other suitable magnetic, optical, physical, electronic memory devices, or other data structures. The controller 200 may also, or alternatively, include integrated circuits and/or analog devices, e.g., transistors, comparators, operational amplifiers, etc., to execute the logic and control signals described herein. The controller 200 includes a plurality of inputs 210 and outputs 212 to and from various components of the lawn mower 12. For example, the controller 200 may control the motor 36 and/or the prime mover 16, e.g., to control the movement of the lawn mower 12 along the support surface. The controller 200 is configured to provide control signals to the outputs 212 and to receive data and/or signals (e.g., sensor data, user input signals, etc.) from the inputs 210, such as a sensor 214. The inputs 210 and outputs 212 are in communication with the controller 200, e.g., by way of hard-wired and/or wireless communications such as by satellite, internet, mobile telecommunications technology, a frequency, a wavelength, Bluetooth^{®}, or the like. The controller 200 may include a navigation system, which may include one or more of a global positioning system (GPS), beacons, sensors such as image sensors, ultrasonic sensors, wire sensors, and an algorithm for navigating an area to be mowed. However, in other implementations, the lawn mower 12 may be non-autonomous.

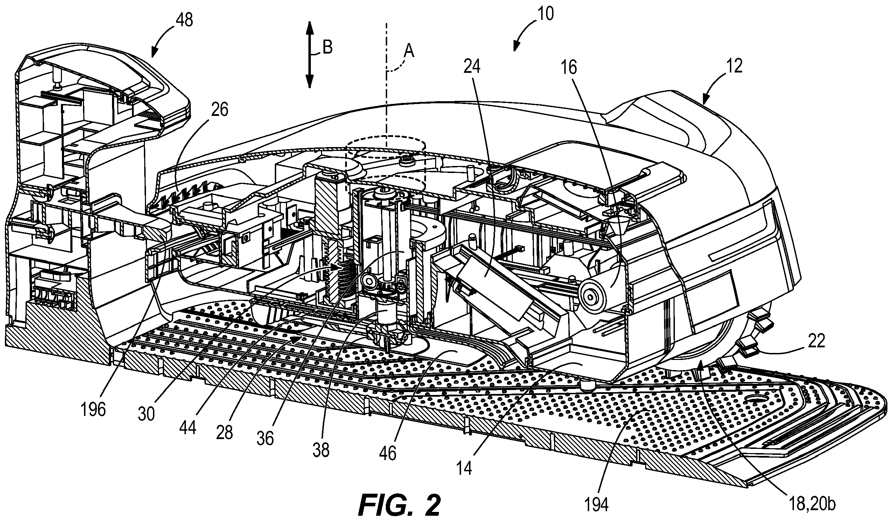

With reference to Fig. 2, the lawn mower 12 includes a deck 14 for supporting various components of the lawn mower 12, as will be described in greater detail below. The lawn mower 12 includes at least one prime mover 16 cooperating with a plurality of wheels 18 for providing tractive effort to move the lawn mower 12 across a support surface, such as the charging station 48 or a lawn to be mowed. The at least one prime mover 16 may be supported by the deck 14. For example, the at least one prime mover 16 may include one or more electric motors 16 in the illustrated implementation. Thus, the lawn mower 12 may be embodied as an electric lawn mower 12. However, in other implementations the prime mover 16 may include another type of motor, a gasoline engine, or the like, in any suitable quantity and combination.

The lawn mower 12 also includes the plurality of wheels 18 (Fig. 1), which may be supported by the deck 14 (Fig. 2), for converting the tractive effort into motion of the lawn mower 12 on the support surface. Each of the plurality of wheels 18 supports a tire 22 in the illustrated implementation. However, the plurality of wheels 18 may support any combination of one or more of tires, continuous tracks, or the like in other implementations. The plurality of wheels 18 includes two front wheels 20a and two rear wheels 20b, but other quantities of wheels may be employed in other implementations. In the illustrated implementation, each of the two rear wheels 20b is operatively coupled to its own prime mover 16 (such as two electric motors, one for each respective rear wheel 20b) to apply torque thereto, and the two front wheels 20a are not driven. However, other torque-transmission arrangements can be used in other implementations with any quantity and combination of driven and non-driven wheels, any number of wheels being driven by a single prime mover, and any number of prime movers.

The lawn mower 12 includes a power source 24 (Fig. 2), such as a removable and rechargeable battery, for powering the at least one prime mover 16 such that the lawn mower 12 can perform a lawn mowing operation in a cordless fashion. The power source 24 may include one or more lithium-ion battery cells, and/or other battery chemistries. The power source 24 may be removable from the lawn mower 12. In other implementations, the at least one prime mover 16 may be powered by other power sources, such as solar panels, fuel cells, compressed fluid, fuel, or the like. The lawn mower 12 includes a battery charging contact 26 for receiving a charge from an external power source (not shown) for charging the power source 24.

With reference to Figs. 1 and 2, the charging station 48 includes a docking pad 194 and a battery charging terminal 196. The docking pad 194 defines a generally planar surface 198, with "generally planar surface" being defined as providing enough of a portion of a planar surface, i.e., comprised of a single continuous surface or a plurality of separated (discontinuous) surfaces, for the lawn mower 12 to drive up onto and be supported by during a charging operation. The battery charging terminal 196 is configured to engage with the battery charging contact 26 on the lawn mower 12 to provide an electrical connection therebetween for charging the power source 24 (e.g., battery).

The lawn mower 12 includes a cutting module 30 (Fig. 2), which may be supported by the deck 14. The cutting module 30 includes a blade module 28 (which is one example herein of a driven implement) and a motor 36 configured to drive the blade module 28. In the illustrated implementation, the blade module 28 includes one or more blades 44, and the motor 36 drives the blade module 28 about an axis of rotation A. In other implementations, the blade module 28 includes a reciprocal trimming unit (not shown) having linearly reciprocating trimming blades, and the motor 36 drives the trimming blades of the trimming unit to move reciprocally. In yet other implementations, the blade module 28 includes a string (not shown), as in a string trimmer, and the motor 36 drives the string about the axis of rotation A. In yet other implementations, the blade module 28 includes a roller blade (not shown), such as a reel blade or squirrel cage blade, and the motor 36 drives the roller blade to roll or rotate about an axis that is generally parallel with the support surface (e.g., generally horizontal). In yet other implementations, the blade module 28 includes an auger (not shown), such as snow blower auger, and the motor 36 drives the auger to roll or rotate about an axis that is generally parallel with the support surface (e.g., generally horizontal). In yet other implementations, the blade module 28 includes a fan (not shown), such as a blower fan, and the motor 36 drives the fan in rotation. Other types of blades are possible in addition to the examples given above. Furthermore, other types of driven implements are also possible, including the blades above as well as other non-blade implements that are driven by the motor 36, such as brushes.

The motor 36 includes a rotatable drive shaft 38 operably coupled to the blade module 28 (or any other driven implement in accordance with any implementation of the disclosure). In the illustrated implementation, the drive shaft 38 is disposed coaxially with the axis of rotation A. In other implementations, the drive shaft 38 may be disposed parallel with (e.g., offset from) or transverse to the axis of rotation A. The axis of rotation A defines an axial direction B. The axial direction B is typically a vertical direction with respect to the support surface on which the lawn mower 12 rides, e.g., up and down with respect to gravity, when the lawn mower 12 is in use. However, in certain implementations, the axis of rotation A (and thus the axial direction B) may be tilted relative to the vertical direction, for example by 1 to 10 degrees, preferably by 3 to 8 degrees, and more preferably by 5 to 6 degrees. In certain implementations, the axis of rotation A may be tilted forward in the travelling direction relative to the vertical direction.

The blade module 28 (Fig. 2) may include the one or more blades 44 supported by a blade holder 46. In the illustrated implementation, each of the one or more blades 44 is configured to cut vegetation, such as grass and other plants. In some implementations, each of the one or more blades 44 may include one or more flailing blades (e.g., made of plastic) and/or one or more strings for cutting vegetation. In yet other implementations, one or more blades 44 may include any other type of blade for cutting vegetation, such as a knife-edge cutter, a serrated cutter, a roller cutter, any of the cutters described above, or any other cutter. In yet other implementations, the blade holder 46 may support other types of blades, such as fan blades, an auger, etc. In yet other implementations, the blade holder 46 may be formed integrally with a blade or blades, a knife edge or edges, teeth, a string or strings, or any other implement in any combination. Thus, the blade holder 46 may support any type of garden tool implement and may be also referred to as an implement holder 46.

The lawn mower 12 also includes an outer housing 32 supported by the deck 14. The outer housing 32 generally protects certain components of the lawn mower 12 from dust and debris.

The lawn mower 12 defines a longitudinal axis C that extends in a direction of travel. A front, a rear, and relative terms "forward", "rearward", "lateral", etc. are all defined relative to the longitudinal axis C (and thus the direction of travel) as is understood in the art. Top, bottom, upper, lower, and the like, are relative terms defined relative to an axis that is normal to the support surface on which the lawn mower 12 travels. The axis normal to the support surface is generally perpendicular to the direction of travel.

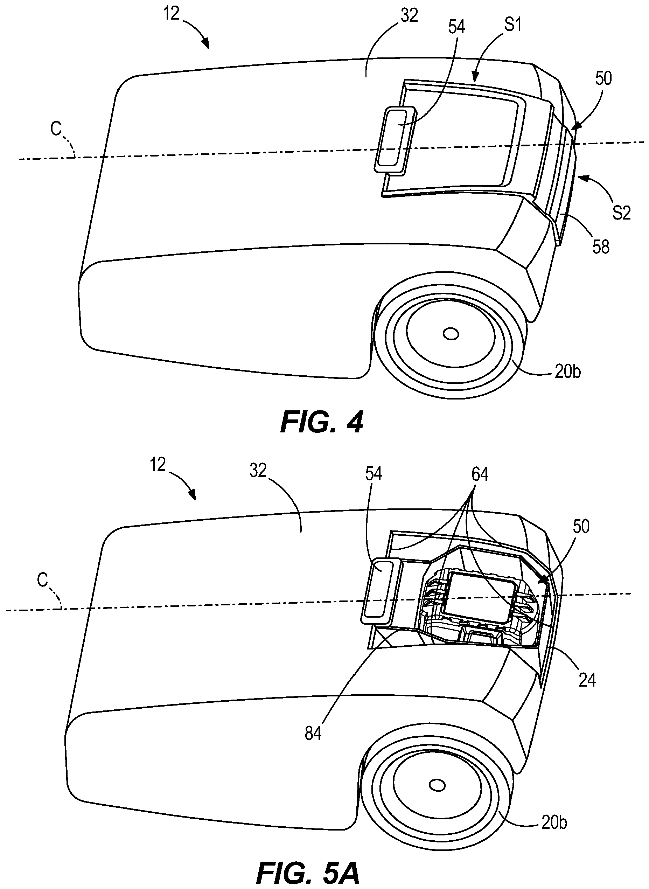

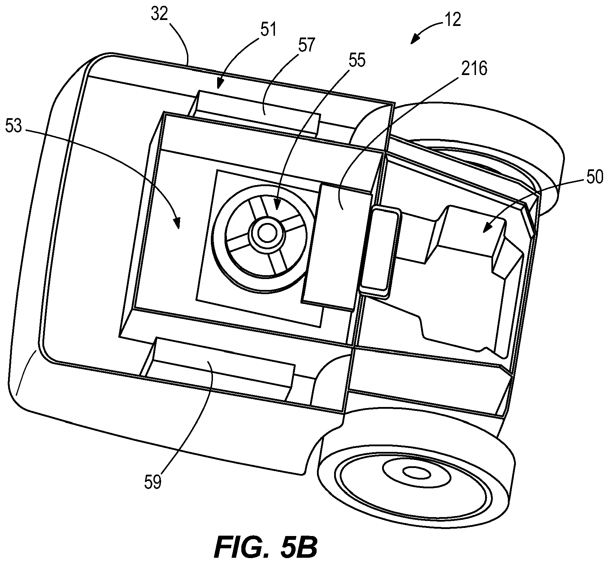

With reference to Figs. 4 and 5, the lawn mower 12 includes a power source compartment 50 for receiving the power source 24. The power source compartment 50 may be disposed anywhere on the lawn mower 12, such as proximate the top, the bottom, the sides, the front, the rear, the center, or offset from the center in the lateral direction, etc., in any combination thereof. In the illustrated implementation, the power source compartment 50 is disposed at a rear of the lawn mower 12 and laterally between the two rear wheels 20b. The power source compartment 50 is disposed directly adjacent a housing surface structure 54 forming a portion of the outer surface of the lawn mower 12, such as an actuator or actuators, a display, any other structure on or adjacent the outer housing 32, or a portion of the outer housing 32 itself. In the illustrated implementation, which is not to be regarded as limiting, the housing surface structure 54 includes an actuator configured as a stop button, though other types of actuators serving any other purpose may be employed, such as a switch, a slider, a rocker, a lever, a dial, a touch pad, an actuatable display, etc. More specifically, the power source compartment 50 is disposed rearwards of the housing surface structure 54 that is disposed generally centrally and is accessible from a top side of the lawn mower 12. The housing surface structure 54 may be configured as an emergency stop button (or other type of emergency stop actuator) to stop the prime mover 16. For example, the housing surface structure 54 may be configured to disconnect the prime mover 16 from the power source 24, or to stop the prime mover 16 by any other means. The housing surface structure 54 may be configured to be actuated manually.

With reference to Fig. 5B, the mower 12 defines at least three interior compartments: the power source compartment 50, an electronics compartment 51, and a mechanical compartment 53 for a height adjustment module 55. The height adjustment module 55 is configured to adjust a height of the one or more blades 44 with respect to the vegetation being cut. The human-machine interface 216, which may be embodied as one or more actuators such as electronic control buttons, may be disposed in the mechanical compartment 53 (as illustrated in Fig. 5B) along with its corresponding electrical components (such as wires, circuit board, etc.); in other implementations, the human-machine interface 216 may be disposed in any other compartment on the mower 12. The terms "electrical compartment" and "mechanical compartment" are not to be regarded as limiting said compartments to only electrical and only mechanical components (respectively) therein; the electronics compartment 51 may have any combination of electronic and/or mechanical components therein, and the mechanical compartment 53 may have any combination of electronic and/or mechanical compartments therein. Thus, the electronics compartment 51 may also be referred to herein as a first compartment, and the mechanical compartment 53 may also be referred to herein as a second compartment. No water seal treatment is provided for the electronics compartment 51 nor the mechanical compartment 53 as a whole. Instead, each electronic unit (e.g., any circuit board(s), wiring, control panel(s), etc., such as a battery management system 57 (BMS), a microcontroller unit 59 (MCU), the human-machine interface 216, and others) is *per se* water sealed by pouring sealant. That is, each electronic unit is individually and directly sealed by sealant disposed directly thereon. This dispenses with the need to provide a water seal to the housing of each compartment as a whole (i.e., the electronics compartment 51 and the mechanical compartment 53), and greatly reduces costs. The power source 24 and an electrical terminal 92 (which is an interface for electrically coupling the power source 24 to the prime mover 16) that receives the power source 24 would be difficult to water-seal directly by disposing sealant. Therefore, water seal measures, described below, are applied to the power source compartment 50 as a whole. Among others, the power source compartment 50 is isolated from the electrical compartment XX and the mechanical compartment XX by an elastic sealing material 64 (Fig. 5B).

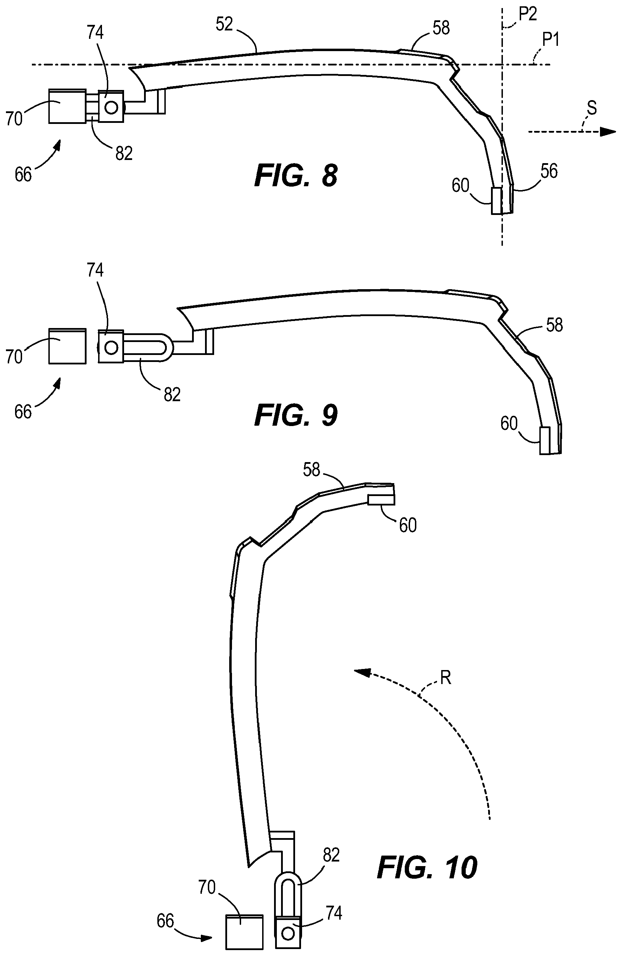

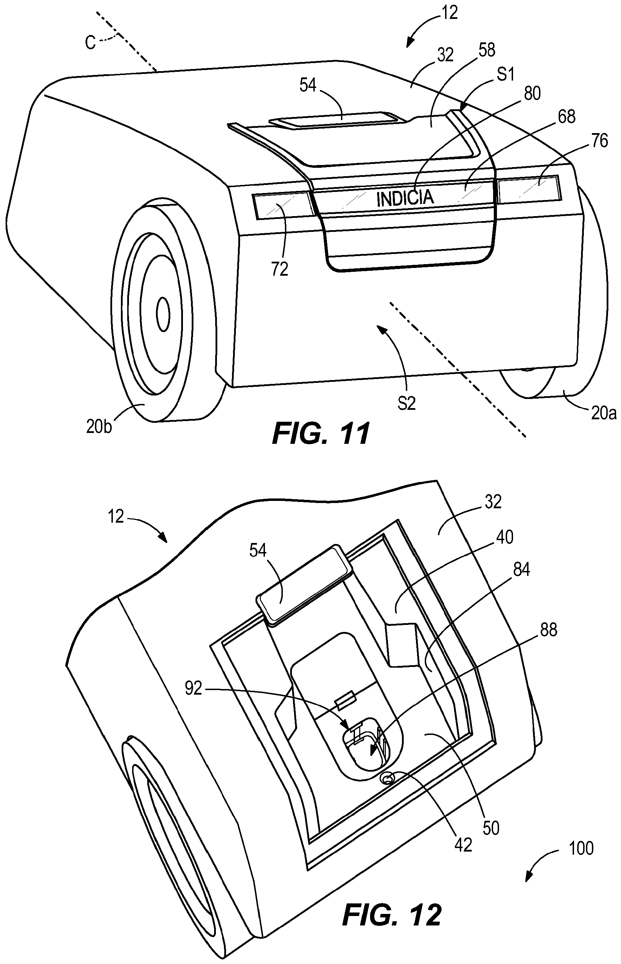

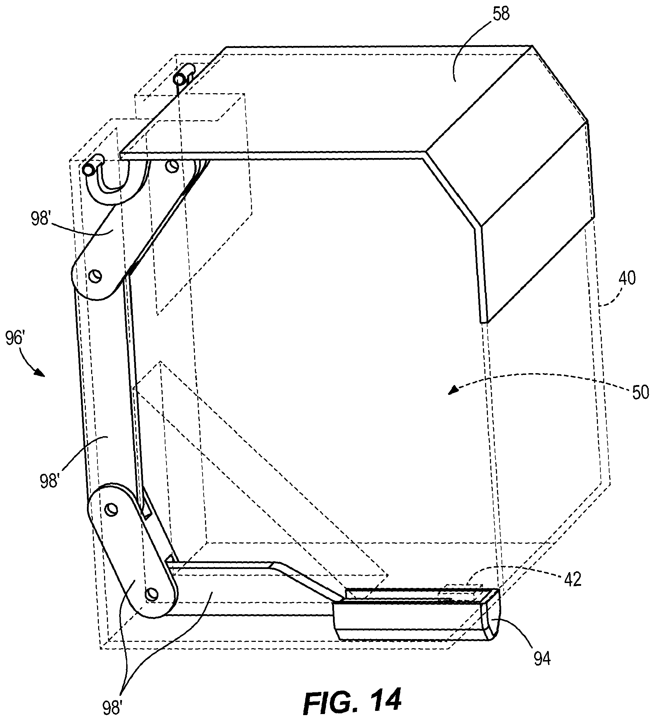

The power source compartment 50 is defined in a housing 40 (see Figs. 12 and 14). The housing 40 may be coupled to the deck 14, may be a portion of the deck 14, or may be a portion of the outer housing 32. The lawn mower 12 includes a door 58 that is movable between an open position in which the power source compartment 50 is open and a closed position in which the power source compartment 50 is closed. The door 58 forms part of the outer housing 32 (e.g., is disposed in a void in the outer housing 32 and may be flush with the outer housing 32). The door 58 may be disposed anywhere on the lawn mower 12, such as the top, the bottom, the sides, the front, the rear, the center, or offset from the center in the lateral direction, etc., or in any combination thereof. For example, the door 58 may include a first portion 52 generally disposed on a first side S1 (Fig. 4) of the lawn mower 12 and a second portion 56 depending from the first portion 52 and generally disposed on a second side S2 of the lawn mower 12. The first side S 1 is generally defined by a first imaginary plane P1 (Fig. 8), and the second side S2 is generally defined by a second imaginary plane P2. The first and second imaginary planes P1, P2 are orthogonal to each other. The first portion 52 intersects the first imaginary plane P1 and the second portion 56 intersects the second imaginary plane P2 in a location not intersecting the first imaginary plane P1. Thus, the first and second potions 52, 56 need not be completely coincident with the first and second imaginary planes P1, P2. Rather, this description is intended to define the door 58 as non-planar and generally disposed on two orthogonal sides (S1, S2) of the lawn mower 12, which may entail sealing the door 58 in two directions as will be described in greater detail below. In some implementations, the door 58 need not be disposed on two orthogonal sides of the lawn mower 12 and may have any shape or configuration that selectively opens and closes the power source compartment 50.

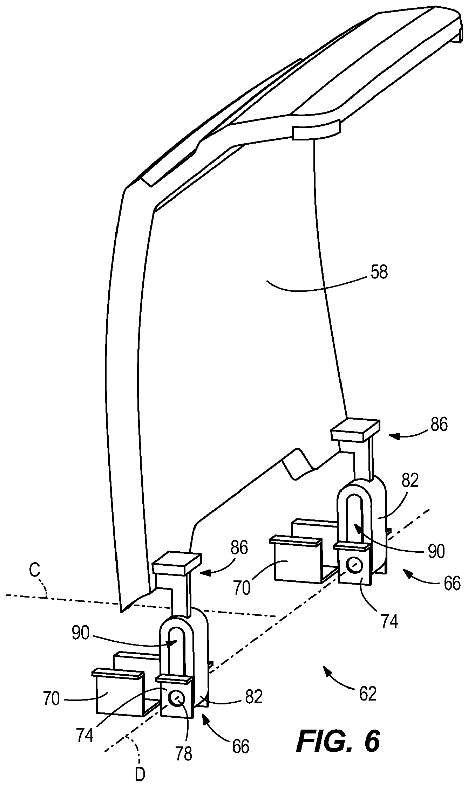

In some implementations, when the door 58 is in the closed position (Fig. 4, Fig. 8), the power source compartment 50 is sealed so that water and other debris is significantly inhibited from entering the compartment 50. In other implementations, when the door 58 is in the closed position, the power source compartment 50 may be at least partially sealed. When the door 58 is in the open position (Fig. 6, Fig. 10), the power source compartment 50 is unsealed, and access to the compartment 50 is provided (e.g., for installation and removal of the power source 24). As will be described in further detail below, the door 58 is coupled to a hinge mechanism 62 (Fig. 6) which allows the door 58 to move relative to the outer housing 32, thereby opening or closing the power source compartment 50, without interfering with other components of the lawn mower 12. In order for the door 58 to create a water-tight seal of the power source compartment 50 in some implementations, there exists effectively no clearance between the door 58 and other components of the lawn mower 12 to seal the power source compartment 50. The seal may exist between the door 58 and any component of the lawn mower 12, such as the housing surface structure 54, the outer housing 32, and/or the elastic sealing material 64 (Figs. 5A and 5B). The elastic sealing material 64 may be disposed on the outer housing 32 and/or on the door 58. The elastic sealing material 64 may be disposed around an entire perimeter thereof, or around at least a portion of the perimeter thereof in other implementations. The elastic sealing material 64 seals between the door 58 and the outer housing 32 when the door 58 is in the closed position. The elastic sealing material 64 seals the power source compartment 50 against water intrusion to protect the power source 24. The door 58 engages the housing surface structure 54 in the closed position to, at least in part, provide the water-tight seal. The door 58 may directly engage the housing surface structure 54 in the closed position or may indirectly engage the housing surface structure 54 by way of the elastic sealing material 64. As such, the door 58 seals against the housing surface structure 54. As the door 58 moves from the closed position to the open position, the hinge mechanism 62 creates clearance between the door 58 and the outer housing 32. For example, the clearance allows for the seal to be broken between the door 58 and the housing surface structure 54, and between the door 58 and the power source compartment 50. In the illustrated implementation, the door 58 and the hinge mechanism 62 are oriented such that the power source compartment 50 is accessible from the rear and/or the top of the lawn mower 12 when the door 58 is open. In other implementations, the hinge mechanism 62 can be oriented in other directions on the lawn mower 12, depending on the desired opening direction of the door 58.

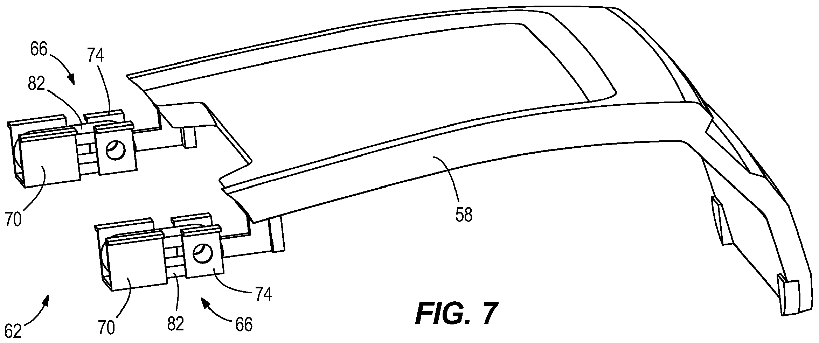

With reference to Figs. 6 and 7, the hinge mechanism 62 includes two laterally spaced apart hinges 66 guiding movement of the door 58 relative to the outer housing 32. In other implementations, the door 58 may be supported by more or fewer hinges 66. The hinges 66 are essentially identical such that only one hinge 66 need be described herein, and it is understood that description of one hinge 66 applies to all of the hinges 66.

While certain orientations and directions of the hinge 66 are described below, it should be understood that any suitable arrangements, directions, and orientations are possible. The hinge 66 includes a hinge seat 70, a shaft seat 74, and a pivot shaft 78 (Fig. 6). The hinge seat 70 is fixed relative to the deck 14. The hinge seat 70 may be coupled to the outer housing 32 and fixed relative to the outer housing 32. The hinge seat 70 may be disposed forward of the shaft seat 74. The shaft seat 74 is fixed relative to the deck 14. The shaft seat 74 may be coupled to the outer housing 32 and fixed relative to the outer housing 32. The shaft seat 74 may be formed from the same piece of material, or a separate piece of material, as the hinge seat 70. The shaft seat 74 may be disposed rearwards of the hinge seat 70 and supports the pivot shaft 78. The pivot shaft 78 is oriented transverse to the longitudinal axis C and defines a rotational axis D. The hinge 66 further includes a hinge body 82 to which a support 86 is coupled. The hinge body 82 is movable relative to the pivot shaft 78. The hinge body 82 of the illustrated implementation includes a slot 90 extending along a length thereof. The pivot shaft 78 is received within the slot 90 so that the hinge body 82 is translatable relative to the pivot shaft 78 along the slot 90, and the hinge body 82 is rotatable about the rotational axis D. The support 86 is adapted to couple the door 58 to the hinge body 82 so that the door 58 moves with the hinge body 82. In some implementations, the support 86 is integrally formed with the hinge body 82.

When the hinge 66 is in a closed position (Figs. 7 and 8), which corresponds to the closed position of the door 58, the pivot shaft 78 is disposed within the slot 90 proximate the support 86, and the hinge body 82 extends towards a front of the lawn mower 12 and is received within the hinge seat 70. The hinge seat 70 inhibits the hinge body 82 from rotating about the pivot shaft 78. The hinge seat 70 may restrain the hinge body 82 to linear translation, e.g., parallel to the longitudinal axis C in the illustrated implementation.

To open the door 58, the support 86 is first moved away from the hinge seat 70 (e.g., rearwards relative to the hinge seat 70), so that the hinge seat 70 does not interfere with the hinge body 82. In other words, the door 58 slides in a direction S from the closed position (Fig. 8) toward an intermediate position (Fig. 9). In the intermediate position (as shown in Fig. 9), the seal between the door 58 and the housing surface structure 54 broken. Thus, sliding the door 58 breaks the seal between the door 58 and the housing surface structure 54. In the intermediate position, the pivot shaft 78 is disposed in the slot 90 distal from the support 86 and the hinge body 82 is free to rotate about the pivot shaft 78. The hinge 66 is then rotatable in a direction R about the pivot shaft 78 to an open position (Figs. 6 and 10), which corresponds to the open position of the door 58.

The hinge 66 may include a damping member (not shown) for cushioning the parts of the hinge 66 during movement. The damping member may include an elastic material, a foam, a spring, a pneumatic device, a hydraulic device, or the like.

As discussed above, the door 58 is non-planar and includes a first portion 52 and a second portion 56 in different orthogonal planes P1, P2, respectively. Thus, the elastic sealing material 64 is sandwiched from the first side S1 and from the second side S2 of the lawn mower 12. The sliding of the door 58 in the direction S improves sealing along the second side S2 of the door 58.

A magnetic closure 60 (Figs. 8-10) may be disposed between the door 58 and the outer housing 32 such that a magnetic force acts to hold the door 58 in the closed position. The magnetic closure 60 may include one or more of a permanent magnet(s), an electromagnet(s), a ferromagnetic material(s), a ferrimagnetic material(s), and/or any material(s) that is attracted to magnets (such as iron, nickel, cobalt, steel, manganese, gadolinium, lodestone, alloys thereof or of any suitable materials, etc.), or the like. The magnetic closure 60 may include one or more of such magnets and/or materials attracted to magnets, such as a pair of magnets, a magnet and ferromagnetic material pair, or any other suitable combination of materials that are attracted to each other by magnetic forces. The magnetic closure 60 may be disposed on the door 58 and/or on the outer housing 32 and/or on the housing surface structure 54. More than one magnetic closure 60 may be employed. The magnetic closure 60 is configured to hold the door 58 in the closed position by the magnetic force. The magnetic closure 60 may also improve the seal of the door 58 around the power source compartment 50 by the magnetic force, which acts to tighten engagement with the elastic sealing material 64.

With reference to Fig. 11, the door 58 also includes a display portion 68. The display portion 68 may have any desired shape. In the illustrated implementation, the display portion 68 is generally elongated and extends laterally across the door 58. The lawn mower 12 also includes a first light 72 and a second light 76, each of which is disposed adjacent the display portion 68, e.g., laterally adjacent as illustrated or adjacent in any other direction. However, one light, three lights, or more lights may be employed in other implementations, and one, some or all of the light or lights may abut the display portion 68. The first and second lights 72, 76 each include one or more light emitting diodes (LEDs), but may each include any type of illuminant in other implementations. The display portion 68 may be at least partially formed from a light conductive material such that the display portion 68 appears illuminated when one or both of the first or second lights 72, 76 is illuminated. In other words, light from one or both of the first or second lights 72, 76 is conducted within the display portion 68 and emitted from the display portion 68 to give the appearance of illumination. Thus, the display portion 68 is disposed in light communication with one or both of the first or second lights 72, 76. The display portion 68 may include indicia 80, such as a logo or logos, an image or images, a letter or letters, a word or words, a character or characters, or any combination thereof. The indicia 80 may be formed in the light conductive material such that the indicia 80 appears to be illuminated when one or both of the first or second lights 72, 76 is illuminated. In some implementations, the indicia 80 may be formed from non-light conductive material such the illumination appears around the indicia 80.

As illustrated in Figs. 12-14 and described below, the power source compartment 50 is selectively drainable. More specifically, the power source compartment 50 is selectively drainable other than through the door 58, e.g., the drain functionality is not provided by the door 58. The housing 40 defining the power source compartment 50 may include a drain aperture 42 (best illustrated in Fig. 14) configured to allow fluid to drain from the power source compartment 50, e.g., under the effect of gravity. The drain aperture 42 may be disposed in a lower portion of the housing 40, e.g., lower relative to the door 58, and/or in a lower half of the power source compartment 50, and/or in a lower third of the power source compartment 50, and/or in a lower quarter of the power source compartment 50, and/or in a lower 10% of the height of the power source compartment 50, and/or at or near a bottom of the power source compartment 50. The drain aperture 42 provides fluid communication between the power source compartment 50 and an external environment 100 other than through the door 58, either directly or indirectly. For example, the drain aperture 42 may provide direct fluid communication from the power source compartment 50 to the external environment 100 in some implementations, or may provide indirect fluid communication from the power source compartment 50 to the external environment 100 in other implementations. Indirect fluid communication may be provided in any suitable manner, such as by way of another opening (not shown) on the deck 14, or by way of any other suitable structure. Thus, the door 58 selectively opens and closes a door aperture 84 to open and close the power source compartment 50, and the drain aperture 42 is independent of the door aperture 84.

The housing 40 also defines a power source receptacle 88 for receiving the power source 24. An electrical terminal 92 is disposed in the power source compartment 50, specifically in the power source receptacle 88, for electrically coupling the power source 24 to the prime mover 16.

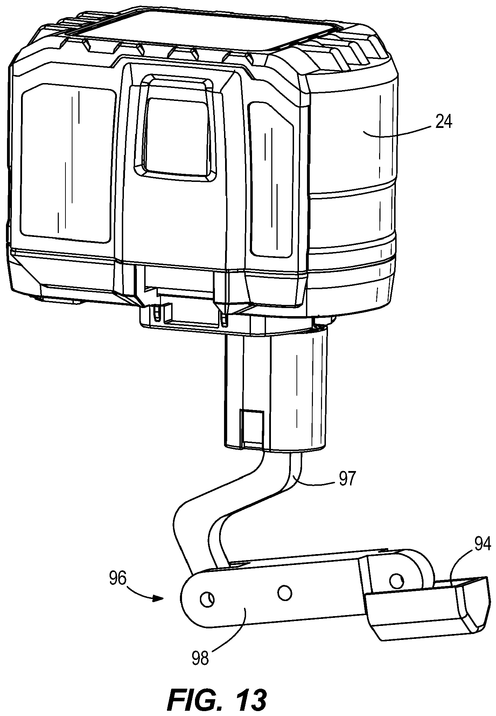

As illustrated in Figs. 13-14, a stopper 94 (which may also be referred to herein as a drain stopper 94) selectively opens and closes the drain aperture 42. The stopper 94 is movable between a draining position in which the drain aperture 42 is in fluid communication with the external environment 100 for draining fluid and a stopped position (Fig. 14) in which the second aperture is closed. In some implementations, the stopper 94 is manually moved by an operator (e.g., by sliding the stopper 94 manually); in other implementations, the stopper 94 is moved in response to movement of another part of the lawn mower 12, such as the power source 24 and/or the door 58, or any other part;; in yet other implementations, the stopper 94 seals the drain aperture 42 under the effect of gravity when the lawn mower 12 is flipped over. In the flipped over orientation, the lawn mower 12 is upside-down relative to the normal orientation of the lawn mower 12 during a lawn cutting operation, and a user may wash the bottom of the deck 14, e.g., with pressurized water, in the flipped over orientation. The stopper 94 may be movable between the draining position and the stopped position in any suitable fashion, such as slidable, as illustrated herein, which is not to be regarded as limiting, or rotatable, pivotable, insertable, rockable, expandable, retractable, movable by a movable valve member, etc.

In yet other implementations, the stopper 94 is electronically moved. For example, the stopper 94 may be movable by programming movement of a linkage 96, 96' to move the stopper 94. Such programming may be programmed into the controller 200. The controller 200 may be configured to move the stopper 94 automatically or in response to a user input such as through the human-machine interface 216. Automatic control may include programming the controller 200 to move the stopper 94 in response to input from the sensor 214, which may send a signal corresponding to a position of the power source 24 and/or a position of the door 58, or the like. Thus, the controller 200 may be programmed to move the stopper 94 in response to movement of any part of the lawn mower 12, such as the power source 24 and/or the door 58, or any other part, or in response to a user input.

The stopper 94 may be a valve member (e.g., a ball, a butterfly, a pin, a disk, a needle, a plug, a plunger, a piston, etc.) movable between the stopped position in which the valve member is seated in a valve seat to effectively close the second aperture and the draining position in which the valve member is not seated in the valve seat to allow fluid communication between the power source compartment 50 and the external environment 100 for draining. Other types of valve members are also possible. The stopper 94 (e.g., valve member) may be controlled electronically, e.g., by a solenoid or any other electronic means and may be controlled by the controller 200 as described above. The stopper 94 may be a check valve member, and a check valve including the stopper 94 may allow draining out of the power source compartment 50 while inhibiting entrance of external fluid into the power source compartment 50 through the drain aperture 42. Other types of one-way valves are also possible. A pump may be employed in other implementations, the pump being configured to remove fluid from the power source compartment 50.

The stopper 94 may include an elastic material such as rubber, elastomer, silicone, etc., or may include a rigid material such as metal, plastic, etc.

In the illustrated implementation of Fig. 13, which is not to be regarded as limiting, the linkage 96 is operatively coupled between the power source 24 and the stopper 94 to mechanically move the stopper 94 in response to movement of the power source 24. The stopper 94 is configured to move to the stopped position when the power source 24 is inserted into the power source compartment 50 and to move to the draining position when the power source 24 is removed from the power source compartment 50. More specifically, the power source 24 is inserted into the power source receptacle 88 to move the stopper 94 to the draining position. Movement of the stopper 94 to the draining position may occur in response to the power source 24 being electrically coupled with the electrical terminal 92.

The linkage 96 may have any suitable configuration to operatively couple insertion/removal of the power source 24 with movement of the stopper 94. However, in the illustrated implementation, which is not to be regarded as limiting, the linkage 96 includes a drain actuator 97 configured to move between a resting position towards which the drain actuator 97 is biased towards the power source compartment 50 and an engaged position in which the drain actuator 97 is moved by engagement of the power source 24 therewith. In the resting position, the drain actuator 97 is at least partially disposed in the power source compartment 50 and the stopper 94 is in the draining position. One or more links 98 are operably coupled between the drain actuator 97 and the stopper 94 to impart movement to the stopper 94 in response to movement of the drain actuator 97. The one or more links 98 may include any combination of pivotable, slidable, rocking, and/or rotatable member(s), springs, and/or any other suitable motion transfer means such as one or more gears. A substantial portion of the linkage 96 is provided external to the power source compartment 50, e.g., in an interior space between the deck 14 and the power source compartment 50. The substantial portion may include the one or more links 98 and/or a portion of the drain actuator 97. This lessens interference with placement of the power source 24. Thus, with no power source 24 inserted into the power source compartment 50, the power source compartment 50 is drainable. When the power source 24 is inserted into the compartment 50, the power source compartment 50 is substantially sealed such that fluid is inhibited from entering the power source compartment 50 through the drain aperture 42. As a result, the operator may clean the lawn mower 12 without cleaning fluid entering the power source compartment 50 and wetting the power source 24. Furthermore, when the power source 24 is removed, any fluid entering the power source compartment 50 is able to drain through the drain aperture 42.

The linkage 96 (e.g., the drain actuator 97) may be embodied as a sensor (e.g., see sensor 214 in Fig. 3) configured to send a signal to the controller 200 corresponding to the presence or absence of the power source 24 in the power source compartment 50. For example, but not to be regarded as limiting, the sensor 214 may include a button, a switch, a lever, an optical sensor, a proximity sensor, a Hall effect sensor, a motion sensor, any type of actuator moved by engagement with the power source 24 or sensing a position of the power source 24, etc. With an electronic linkage 96, there may be no need for the one or more links 98 mechanically coupling the drain actuator 97 to the stopper 94. In other implementations, the drain actuator 97 may be configured to be actuated by the door 58, or by any other part of the lawn mower 12, or manually by an operator.

An alternative implementation of the linkage 96 is illustrated in Fig. 14. In the illustrated implementation of Fig. 14, a linkage 96' is operatively coupled between the door 58 and the stopper 94 to mechanically move the stopper 94 in response to movement of the door 58. The stopper 94 is configured to move to the stopped position when the door 58 is closed (as illustrated) and to move to the draining position when the door 58 is open. The stopper 94 may be configured to move to the draining position or an intermediate position allowing draining when the door 58 is in the intermediate position (Fig. 9), or simply when the door 58 is not closed. Alternatively, the stopper 94 may be configured to move to the stopped position when the door 58 is moved from the open position to the intermediate position (Fig. 9). Other signaling positions are possible. Thus, the position of the stopper 94 depends on the position of the door 58.

The linkage 96' may have any suitable configuration to operatively couple movement of the door 58 with movement of the stopper 94. However, in the illustrated implementation, which is not to be regarded as limiting, the linkage 96' includes one or more links 98' configured to convert movement of the door 58 into movement of the stopper 94. The one or more links 98' may include any combination of pivotable, slidable, rocking, and/or rotatable members, springs, and/or any other suitable motion transfer means such as one or more gears. Thus, with the door 58 open, the power source compartment 50 is drainable. A substantial portion of the linkage 96' is provided external to the power source compartment 50, e.g., in an interior space between the deck 14 and the power source compartment 50. The substantial portion may include the one or more links 98' and/or a portion of the drain actuator 97'. This lessens interference with placement of the power source 24. When the door 58 is closed, the power source compartment 50 is substantially sealed such that fluid is inhibited from entering the power source compartment 50 through the drain aperture 42. As a result, the operator may clean the lawn mower 12 without cleaning fluid entering the power source compartment 50 and wetting the power source 24. Furthermore, when the power source 24 is removed, any fluid entering the power source compartment 50 is able to drain through the drain aperture 42.

The linkage 96' may be embodied as a sensor (e.g., see the sensor 214 in Fig. 3) configured to send a signal to the controller 200 corresponding to the position of the door 58. For example, but not to be regarded as limiting, the sensor 214 may include a button, a switch, a lever, an optical sensor, a proximity sensor, a Hall effect sensor, a motion sensor, any type of actuator moved by engagement with the door 58 or sensing a position of the door 58, etc. With an electronic linkage 96', there may be no need for the one or more links 98' mechanically coupling the drain actuator 97 to the stopper 94.

In operation, with respect to door movement, each support 86 is coupled to the door 58 such that when the hinge mechanism 62 is in the closed position, the door 58 is closed over the power source compartment 50 and the compartment 50 is sealed. To open the compartment 50, the door 58 is first moved slidingly without rotation away from the stop button (e.g., rearwards, in the direction S) to break the seal. The door 58 thus slidingly moves to an intermediate position (Fig. 9) in which the hinge seat 70 does not interfere with the hinge body 82. The door 58 is then rotated (e.g., upwards, in the direction R), about the pivot shaft 78, and the compartment 50 is opened. To close and seal the power source compartment 50, the door 58 is first rotated (e.g., downwards) then translated (e.g., forwards). Thus the door 58 slides back into sealing engagement with the housing surface structure 54.

In operation, with respect to fluid drainage, water or moisture (or any other fluid, such as cleaning solution) may enter the power source compartment 50, particularly when the door 58 is open. In order to reduce fluid that may interfere with the electrical components (e.g., the power source 24 and/or the electrical terminal 92, etc.), the power source compartment 50 is drainable, e.g., through the drain aperture 42. The fluid may pass through the drain aperture 42 under the effect of gravity, or may be pumped through the drain aperture 42. The power source compartment 50 may drainable when the door 58 is open and stopped when the door 58 is closed. Stopping the drain aperture 42 when the door 58 is closed allows the operator to clean the lawn mower 12 and inhibits cleaning fluid (such as water, pressurized water, cleaning solution, etc.) from entering the power source compartment 50 through the drain aperture 42. Additionally or alternatively, the power source compartment 50 may be drainable when the power source 24 is removed and stopped when the power source 24 is disposed in the power source compartment 50. Stopping the drain aperture 42 when the power source 24 is in the power source compartment 50 protects the power source 24 (e.g., from cleaning fluid if the operator cleans the lawn mower 12 with the power source 24 inserted).

The magnetic closure 60 holds the door 58 in the closed position, e.g., when the lawn mower 12 is transported, carried, flipped over for cleaning/maintenance, etc.

In some implementations, the power source 24 may include a power cord or other power-supplying contact (not shown) configured to charge an on-board battery pack on board the lawn mower 12, the power cord/contact (not shown) being selectively receiveable in the power source compartment 50 and configured to mate with the electrical terminal 92 embodied as a charging terminal (such as the battery charging contact 26) in the power source compartment 50. Thus, the selectively drainable power source compartment 50 disclosed herein may also be useful when the power source compartment 50 is embodied as a charging compartment.

While the disclosure has focused on a power source compartment 50 and hinge 66 for a robotic mower, and on a drainage arrangement for the power source compartment 50, it is equally applicable to other types of battery powered garden tools such as a vacuum cleaner, a trimmer, a string trimmer, a brush cutter, a hedge trimmer, a sweeper, a cutter, a plow, a debris blower, a snow blower, etc.

Although the disclosure has been described in detail with reference to preferred implementations, variations and modifications exist within the scope and spirit of one or more independent aspects of the disclosure as described.

Thus, the disclosure provides, among other things, a garden tool 12 having a power source compartment 50 with drainage, and also provides a garden tool 12 having a hinge mechanism 62 that allows a battery compartment door 58 to open and close directly adjacent a stop button and seal the battery compartment 50 against water intrusion.

## Claims

1. A garden tool comprising:
a prime mover (16);
a housing (40) defining a power source compartment (50);
a power source (24) configured to provide power to a prime mover (16), the power source (24) removably receivable in the power source compartment (50);
a door (58) configured to selectively close the power source compartment (50); and
a drain aperture (42) defined in the housing (40) and configured to provide fluid drainage from the power source compartment (50) other than through the door (58).

2. The garden tool of claim 1, wherein the housing (40) further defines a door aperture (84) in communication with the power source compartment (50), wherein the door (58) is configured to move between a closed position in which the door aperture (84) is closed and an open position in which the door aperture (84) is open, and wherein the drain aperture (42) is configured to provide fluid communication between the power source compartment (50) and an external environment (100) for draining fluid from the power source compartment (50).

3. The garden tool of claim 1, further comprising a stopper (94) configured to selectively close the drain aperture (42), wherein the stopper (94) is movable between a draining position in which the drain aperture (42) is in fluid communication with an external environment (100) for draining fluid and a stopped position in which the drain aperture (42) is closed.

4. The garden tool of claim 3, wherein the stopper (94) is configured to move to the stopped position when the power source (24) is inserted into the power source compartment (50) and to move to the draining position when the power source (24) is removed from the power source compartment (50).

5. The garden tool of claim 4, further comprising a linkage (96) operably coupled to the stopper (94) and engageable by the power source (24) in the power source compartment (50).

6. The garden tool of claim 5, wherein the linkage (96) includes a drain actuator (97) configured to move between a resting position towards which the drain actuator (97) is biased into the power source compartment (50) and an engaged position in which the drain actuator (97) is moved by engagement of the power source (24) therewith.

7. The garden tool of claim 5, wherein the linkage (96) is embodied as a sensor (214) configured to send a signal to the controller (200) corresponding to the presence or absence of the power source (24) in the power source compartment (50).

8. The garden tool of claim 3, wherein the stopper (94) is configured to move to the stopped position when the door (58) is in the closed position and to move to the draining position when the door (58) is in the open position.

9. The garden tool of claim 8, further comprising a linkage (96') operably coupled between the stopper (94) and the door (58).

10. The garden tool of claim 9, wherein the linkage (96') is disposed at least partly outside the power source compartment (50).

11. The garden tool of claim 9, wherein the linkage (96') includes one or more mechanical links (98').

12. The garden tool of claim 9, wherein the linkage (96') is embodied as a sensor (214) configured to send a signal to a controller (200) corresponding to a position of the door (58).

13. The garden tool of claim 1, further comprising an electrical terminal (92) disposed in the power source compartment (50), the electrical terminal (92) configured to electrically couple the power source (24) to the prime mover (16).

14. The garden tool according to any of the preceding claims, wherein the garden tool is a robotic lawn mower comprising:
a plurality of wheels (20a, 20b) operatively coupled to the prime mover (16) and configured to convert tractive effort into motion of the robotic lawn mower (12) on a support surface; and
a blade (44) configured to cut vegetation.

15. The garden tool of claim 14, wherein the housing (40) defines a top and a bottom generally opposite the top, wherein the blade (44) is disposed closer to the bottom than the top, wherein the door (58) is at least partially disposed on the top, and wherein the power source compartment (50) is selectively drainable through the bottom by way of the drain aperture (42).
